# EUROPÄISCHE PATENTSCHRIFT

(11) **EP 0 668 992 B1**
(45) Veröffentlichungstag und Bekanntmachung des Hinweises auf die Patenterteilung: **27.01.1999**
(21) Anmeldenummer: 94927561.4
(22) Anmeldetag: 05.09.1994
(51) Int. Cl.: G01F 1/84

(54) **CORIOLIS-MASSEDURCHFLUSSAUFNEHMER MIT SCHRAUBENFÖRMIGEN MESSROHR**
CORIOLIS MASS FLOW SENSOR WITH HELICAL MEASUREMENT TUBE
CAPTEUR DE DEBIT MASSIQUE A EFFET DE CORIOLIS ET A TUBE DE MESURE HELICOIDAL

(30) Priorität: 11.09.1993 EP 93114632
(43) Veröffentlichungstag der Anmeldung: 30.08.1995
(73) Patentinhaber: Endress + Hauser Flowtec AG, CH-4153 Reinach BL 1 (CH)
(72) Erfinder: KOUDAL, Ole, CH-4153 Reinach (CH); WENGER, Alfred, CH-8413 Neftenbach (CH)
(74) Vertreter: Morstadt, Volker, Dipl.-Ing.
(86) Internationale Anmeldenummer: EP9402953
(87) Internationale Veröffentlichungsnummer: WO9507445

(56) Entgegenhaltungen:
- EP-A- 0 271 605
- EP-A- 0 398 103
- US-A- 4 733 569
- US-A- 4 957 005

## Beschreibung

Die Erfindung betrifft Massedurchflußaufnehmer nach dem Coriolis-Prinzip mit einem schraubenförmigen Meßrohr als von einem zu messenden Fluid durchströmtem Schwingkörper.

Im umfangreichen Stand der Technik über Coriolis-Massedurchflußaufnehmer mit aus Rohren bestehenden Schwingkörpern gibt es nur zwei prinzipielle Arten von Rohrverläufen, nämlich mindestens ein gerades Rohr oder mindestens ein beliebig gebogenes oder sogar gewundenes Rohr, unter welch letzteren aus technischen Gründen die U-förmige Rohrschleife, also eine solche mit einem geraden Einlaßrohr mit Einlaßende und mit einem geraden Auslaßrohr mit Auslaßende sowie mit einem das Einlaßrohr mit dem Auslaßrohr verbindenden Rohrbogen, die bevorzugten Rohrformen sind.

Bei beiden Arten von Rohrverläufen ist das Meßergebnis um so mehr von der Einbaulage des Massedurchflußaufnehmers abhängig, je weniger der Schwingkörper mechanisch ausbalanciert ist, oder anders ausgedrückt, je größer das mechanische Ungleichgewicht des Schwingkörpers ist. Mechanisch ausbalanciert und somit mechanisch im Gleichgewicht bedeutet, daß der Gesamtimpuls und der Gesamtdrehimpuls des Schwingkörpers jeweils dauernd gleich null sein müssen.

Die Mehrzahl der derzeit marktgängigen Coriolis-Massedurchflußaufnehmer realisiert dieses Gleichgewicht durch einen spiegelsymmetrischen Aufbau des Schwingkörpers; er hat eine Symmetrie-Ebene, und er wird in einem symmetrischen Schwingungsmode erregt, so daß er möglichst perfekt ausbalanciert ist.

Diese Spiegelsymmetrie bedingt aber meist mindestens zwei parallele, in Gegenphase zueinander und somit stimmgabel-artig schwingende Meßrohre, so daß der Fluidstrom in mindestens zwei Teilströme mittels entsprechender Verteilerstücke aufgeteilt und wieder vereinigt werden muß. Dies wird jedoch in manchen Anwendungsfällen, z.B. im Sanitärbereich, als nachteilig betrachtet und bedeutet u.a. auch einen Kostennachteil.

Andererseits können die Verteilerstücke vermieden werden, wenn die (beiden) Meßrohre bezüglich des Fluidstroms in Serie geschaltet werden; dieses System ist nur schwer entleerbar und schon gar nicht selbstentleerbar.

Unter den nichtgeraden Meßrohren stellen die schraubenförmigen Meßrohre eine mehrfach vorbeschriebene Rohrform dar.

In der JP-A 61 - 290 324 und dem zugehörigen englischen Abstract sowie in der US-A 49 57 005 sind zunächst Massedurchflußaufnehmer mit jeweils einem einzigen schraubenförmigen Meßrohr beschrieben, das jedoch durch ein die einzelnen Windungen an einer Umfangsstelle starr miteinander verbindendes Fixierteil mehr oder weniger gut wie die Meßrohre der eben erläuterten spiegelsymmetrischen, mindestens zwei stimmgabel-artig schwingende Rohrschleifen aufweisenden Massedurchflußaufnehmer arbeitet.

In der FR-A 11 39 048 ist (wohl erstmals) ein gyroskopischer Massedurchflußaufnehmer beschrieben,
- der in den Verlauf einer von einem zu messenden Fluid durchströmten Rohrleitung eines gegebenen Durchmessers einsetzbar ist,
- mit einem einzigen, im wesentlichen die Form einer kreiszylindrischen Schraube mit konstanter Steigung und mit mehreren Windungen aufweisenden Meßrohr, und
- mit Mitteln, die das Meßrohr zu Schwingungen anregen.

In der EP-A 210 408 ist ferner ein Massedurchflußaufnehmer nach dem Coriolis-Prinzip beschrieben,
- der in den Verlauf einer von einem zu messenden Fluid durchströmten Rohrleitung eines gegebenen Durchmessers mittels Flanschen einsetzbar ist,
- mit einem einzigen, im wesentlichen die Form einer kreiszylindrischen Schraube mit etwa eineinhalb Windungen aufweisenden, am jeweiligen Ende im entsprechenden Flansch fixierten Meßrohr,
- mit einem äußeren Trägerrohr, dessen jeweiliges Ende in der Nähe des entsprechenden Flansches am Meßrohr fixiert ist, und
- mit Mitteln, die das Meßrohr zu Schwingungen um eine Schwingungsachse, die senkrecht zur Schraubenachse ist und diese nicht schneidet, anregen.

Dieser Massedurchflußaufnehmer ist ersichtlich nicht ausbalanciert; seine Meßergebnisse, insb. deren Nullpunktstabilität, sind daher stark einbaulage-abhängig.

Dies gilt schließlich auch für den in der US-A 47 33 569 beschriebenen Massedurchflußaufnehmer nach dem Coriolis-Prinzip,
- der in den Verlauf einer von einem zu messenden Fluid durchströmten Rohrleitung eines gegebenen Durchmessers einsetzbar ist,
- mit einem einzigen, im wesentlichen die Form einer kreiszylindrischen Schraube mit eineinhalb Windungen aufweisenden, am jeweiligen Ende fixierten Meßrohr,
- mit einem inneren, geraden Trägerelement, von dem nur das jeweilige Ende am entsprechenden Ende des Meßrohrs fixiert ist, und
- mit Mitteln, die das Meßrohr zu Schwingungen senkrecht zur Mittellinie des Meßrohrs und parallel zur Längsachse des Trägerelements anregen.

Trotz der oben geschilderten Nachteile ist ein Massedurchflußaufnehmer mit einem einzigen schraubenförmigen Meßrohr aus mehreren Gründen attraktiv, nämlich weil er eine große Länge des Meßrohrs bei vorgegebener Meßgerätgröße und damit eine große Empfindlichkeit ermöglicht, weil sein Meßrohr ferner in einem kontinuierlichen Biege/Verwindungsprozeß und somit hochpräzise (wie bei geraden und kreisbogenförmigen Meßrohren) herstellbar ist und weil er schließlich in mindestens einer Einbaulage selbstentleerend ist.

Ein Ziel der Erfindung ist es daher, Massedurchflußaufnehmer mit einem einzigen schraubenförmigen Meßrohr so zu verbessern, daß sie unabhängig von der Dichte des Fluids weitgehend ausbalancierte Schwingungsmoden unter Beibehaltung der Selbstentleerung in mindestens einer Einbaulage haben.

Dieses Ziel wird durch die in Anspruch 1 definierte Erfindung erreicht.

Bevorzugte Ausgestaltungen der Erfindung sind in den abhängigen Ansprüchen 2 bis 4 definiert.

Die Erfindung wird nun anhand der Zeichnung näher erläutert, in deren einziger Figur schematisch in teilweise geschnittener Draufsicht und in teilweise geschnittener Seitenansicht der mechanische Teil eines Ausführungsbeispiel eines Massedurchflußaufnehmers nach der Erfindung gezeigt ist.

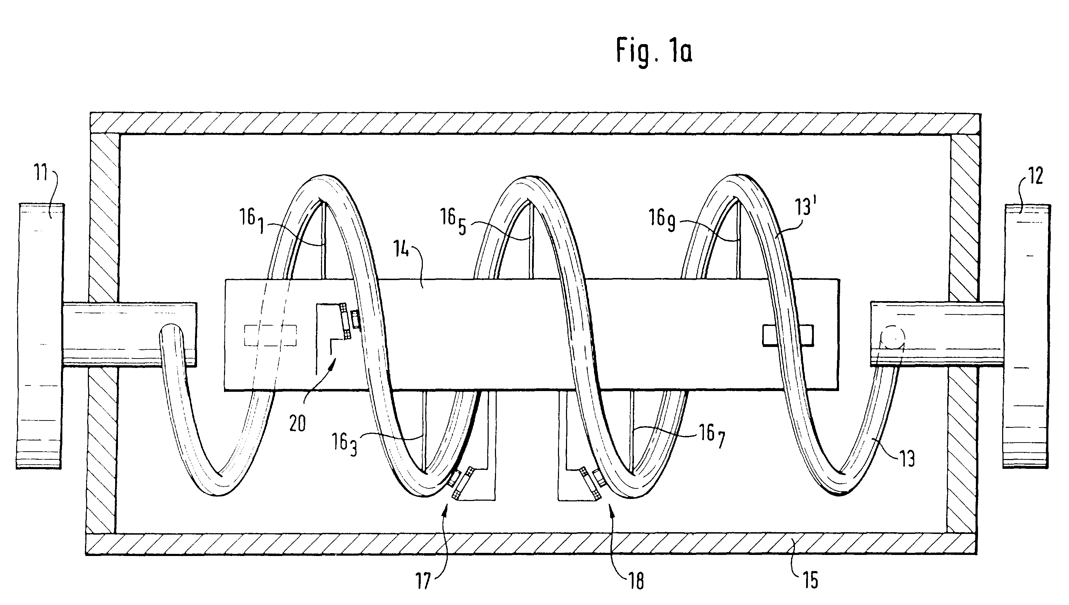

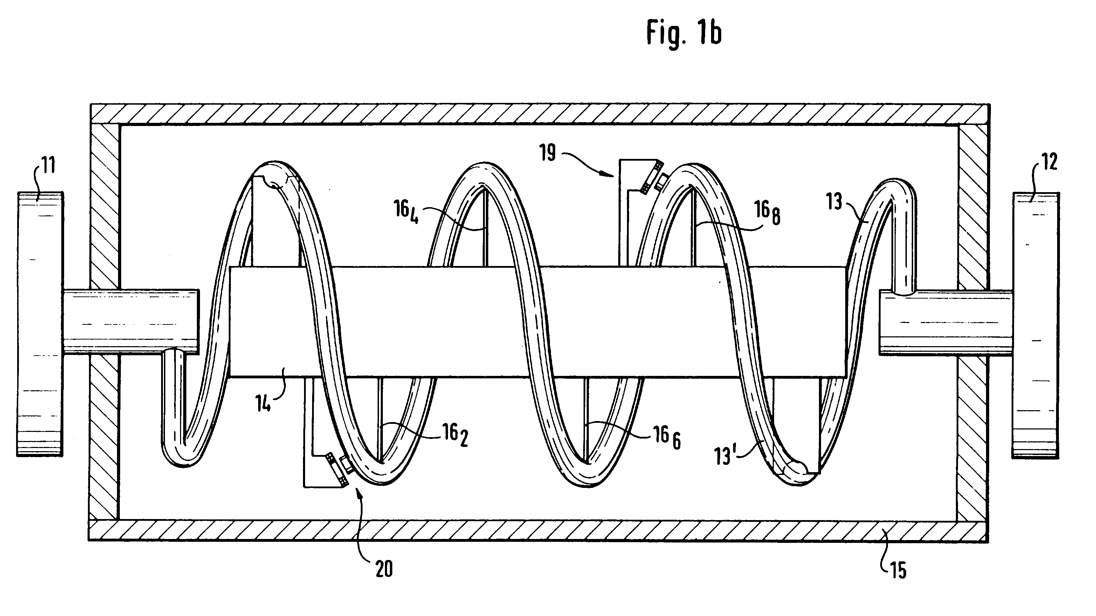

Der in Fig. 1a in Draufsicht und in Fig. 1b in Seitenansicht schematisch gezeigte mechanische Teil eines Massedurchflußaufnehmers, der in den Verlauf einer von einem zu messenden Fluid durchströmten, aus Übersichtlichkeitsgründen jedoch nicht dargestellten Rohrleitung eines gegebenen Durchmessers z.B über Flansche 11, 12 einsetzbar ist, hat ein einziges Meßrohr 13 aus z.B. nichtrostendem Stahl, Titan oder Zirconium, dessen schwingender Teil 13' die Form einer kreiszylindrischen Schraube konstanter Steigung mit mindestens einer Windung aufweist und das am jeweiligen Ende im entsprechenden Flansch 11 bzw. 12 fixiert ist.

Im Ausführungsbeispiel der Fig. 1 hat der schwingende Teil 13' des Meßrohrs 13 zweieinhalb Windungen. Anstatt der Flansche kann die Rohrleitung auch durch Verschraubungen mit dem Massedurchflußaufnehmer verbunden sein.

Das Meßrohr 13 ist ferner in einem äußeren Trägerrohr 15 in der Nähe des jeweiligen Flansches befestigt, oder das Trägerrohr 15 kann auch mit den Flanschen 11, 12 starr verbunden sein.

Der schwingende Teil 13' des Meßrohrs 13 wird von einem inneren Trägerelement 14 begrenzt und gehaltert, von dem nur das jeweilige Ende in der Nähe des entsprechenden Flansches 11, 12 am Meßrohr 13 fixiert ist. Das Trägerelement 14 ist im Ausführungsbeispiel der Figur innerhalb der vom schwingenden Teil 13' des Meßrohrs 13 gebildeten Schraube angeordnet.

Das Trägerelement 14 weist außer den erwähnten End-Befestigungen keine weiteren Befestigungen mit anderen Teilen des Massedurchflußaufnehmers auf, insb. keine Fixierungen am Trägerrohr 15.

Entlang des schwingenden Teils 13' des Meßrohrs 13 sind Verbindungselemente 16 angeordnet, die diesen Teil und das Trägerelement 14 miteinander verbinden. Im Ausführungsbeispiel der Figur sind die Verbindungselemente bevorzugt dünne Metallstäbe, die in ihrer Längsrichtung zwar eine hohe Steifheit haben, jedoch laterale Bewegungen des schwingenden Teils 13' des Meßrohrs 13 zulassen. Wenn, wie oben erwähnt wurde, das Trägerelement 14 außerhalb der "Schraube" angeordnet ist, können die Verbindungselemente auch lediglich auf Zug beansprucht sein, also z.B. Verbindungsdrähte sein.

Im Ausführungsbeispiel der Figur sind neun jeweils um 90° gegeneinander versetzte dünne Metallstäbe als Verbindungselemente 16₁, 16₂, 16₃, 16₄, 16₅, 16₆, 16₇, 16₈, 16₉, vorgesehen, die entlang des schwingenden Teils 13' des Meßrohrs 13 gleichmäßig verteilt sind und die alle mit dem inneren Trägerelement 14 verbunden sind.

Mittels der Verbindungselemente 16₁ bis 16₉ wird sichergestellt, daß lediglich alle diejenigen Schwingungsmoden des Meßrohrteils 13' auftreten können bzw. zulässig sind, in denen dessen Mittellinie auf deren Ruhelage-Zylindermantel-Hüllfläche möglichst verbleibt.

Im Betriebszustand wird der schwingende Teil 13' des Meßrohrs 13 durch entsprechende Mittel senkrecht zu dessen Mittellinie zu Resonanzschwingungen angeregt. Diese Mittel umfassen, wie in Fig. la zu sehen ist, zwei elektrodynamische Treiber-Anordnungen 17, 18, z.B. jeweils mit Spule und Anker, die bevorzugt in gleichem Abstand beidseits der Mitte zwischen den Enden des schwingenden Meßrohrteils 13', in Fig. la jeweils um 180° von der Mitte entfernt, angeordnet sind. Dabei ist der jeweilige eine Teil der elektrodynamischen Treiber-Anordnungen 17, 18 am Meßrohrteil 13' und der jeweilige andere Teil am inneren Trägerelement 14 befestigt.

Die zugehörige Treiber-Elektronik ist in einem nicht gezeichneten Gehäuse untergebracht. Die Treiber-Elektronik kann z.B. von der in der US-A 48 01 897 beschriebenen Art mit Nachführung der Frequenz des Erregersignals entsprechend der aktuellen Gesamtmasse des schwingenden Meßrohrteils 13' sein.

Der Meßrohrteil 13' des Ausführungsbeispiels der Figur der Zeichnung mit zweieinhalb Windungen (also n = 2,5) wird von der Treiber-Elektronik im zweiten Schwingungsmode erregt, der, wie oben bereits erwähnt wurde, in der Mitte zwischen den beiden Enden des Meßrohrteils 13' einen Schwingungsknoten hat. Es läßt sich theoretisch und experimentell zeigen, daß für diese bevorzugte Ausgestaltung der Erfindung eine praktisch vollständige Ausbalancierung in allen drei Raumrichtungen vorliegt.

Im Betriebszustand wird ferner eine Phasendifferenz der Schwingungen des Meßrohrteils 13' mit Mitteln, die an mindestens zwei entlang des Meßrohrteils versetzten Stellen angeordnet sind, gemessen. Diese Mittel umfassen zwei Sensoren 19, 20 und eine Auswerte-Elektronik, die ebenfalls im nicht gezeichneten Gehäuse untergebracht ist. Der eine Teil des jeweiligen Sensors 19, 20 ist wieder wie bei den Treiber-Anordnungen 17, 18 am Meßrohrteil 13' und der jeweilige andere Teil am inneren Trägerelement 14 befestigt.

In Fig. 1b sind die Sensoren 19, 20 symmetrisch um jeweils 270° von der erwähnten Mitte des Meßrohrteils 13' entfernt angeordnet. Diese Sensoren können z.B. opto-elektronische Sensoren sein, wie sie in der genannten US-A 48 01 897 beschrieben sind, oder es können, wie in Fig. 1b zeichnerisch angedeutet, elektromagnetische Sensoren vorgesehen werden, wie sie z.B. in der EP-A 83 144 erläutert sind.

Aus der erwähnten Phasendifferenz ermittelt die Auswerte-Elektronik den Massendurchfluß und/oder aus der Schwingfrequenz des Meßrohrteils 13' die Dichte des Fluids. Eine Auswerteelektronik für die erwähnten optoelektronischen Sensoren ist z.B. in der Zeitschrift "Automatisierungstechnische Praxis atp", 1988, Nr. 5, Seiten 224 bis 230 beschrieben.

Wie bereits ersichtlich geworden sein dürfte, wird bei der Erfindung auf die folgende Eigenschaft einer kreisförmigen Schraubenlinie mit konstanter Steigung zurückgegriffen: Jeder ihrer Punkte hat von der Achse eines sie umhüllenden Kreiszylinders den gleichen Abstand.

Ein in diesem Sinne schraubenförmiges, an zwei Befestigungsstellen fixiertes und dazwischen n Windungen aufweisendes schwingendes Rohr hat eine Anzahl von (Resonanz)schwingungsmoden, von denen viele für Massedurchflußaufnehmer unbrauchbar und daher unerwünscht sind. Diese können jedoch weitgehend unterdrückt werden, wenn, wie in dem die Verbindungselemente enthaltenden Merkmal der Erfindung definiert und durch sie gewährleistet ist, lediglich diejenigen Schwingungsmoden sozusagen zugelassen werden, für die die obige Eigenschaft erhalten bleibt, wobei die obige Schraubenlinie die Mittellinie des schwingenden Meßrohrteils 13' ist.

## Patentansprüche

1. Massedurchflußaufnehmer (10) nach dem Coriolis-Prinzip,
- der in den Verlauf einer von einem zu messenden Fluid durchströmten Rohrleitung eines gegebenen Durchmessers, z.B. mittels Flanschen (11, 12) einsetzbar ist,
- mit einem einzigen, am jeweiligen Ende im entsprechenden Flansch (11, 12) fixierten Meßrohr (13), dessen schwingender Teil (13') die Form einer kreiszylindrischen Schraube konstanter Steigung mit mindestens einer Windung hat,
- mit einem äußeren Trägerrohr (15), dessen jeweiliges Ende am Meßrohr (13) in der Nähe des jeweiligen Flansches (11, 12) oder am entsprechenden Flansch selbst fixiert ist,
- mit einem inneren Trägerelement (14), von dem nur das jeweilige Ende in der Nähe des entsprechenden Flansches (11, 12) am Meßrohr (13) fixiert ist und das innerhalb der vom schwingenden Teil (13') des Meßrohrs (13) gebildeten Schraube angeordnet ist,
- mit entlang des schwingenden Teils (13') des Meßrohrs (13) verteilten, diesen Teil und das Trägerelement (14) miteinander verbindenden Verbindungselementen (16), die in ihrer Längsrichtung eine hohe Steifigkeit haben, jedoch laterale Bewegungen des schwingenden Teils (13') zulassen, so daß nur alle diejenigen Schwingungsmoden des schwingenden Teils (13') des Meßrohrs auftreten können, in denen dessen Mittellinie auf deren Ruhelage-Zylindermantel-Hüllfläche verbleibt,
- mit Mitteln (17, 18), die den schwingenden Teil (13') zu Resonanzschwingungen senkrecht zu dessen Mittellinie anregen, und
- mit Sensoren (19, 20), die an mindestens zwei entlang des schwingenden Teils (13') versetzten Stellen angeordnet sind, von denen ein jeweiliger erster Teil am schwingenden Teil (13') und ein jeweiliger zweiter Teil am inneren Trägerelement (14) befestigt ist.

2. Massedurchflußaufnehmer nach Anspruch 1, bei dem der schwingende Teil (13') des Meßrohrs (13) zweieinhalb Windungen hat und im zweiten Schwingungsmode erregt ist.

3. Massedurchflußaufnehmer nach Anspruch 1 oder 2, bei dem die Verbindungselemente (16) gleichmäßig entlang des schwingenden Teils (13') des Meßrohrs (13) verteilt angeordnet sind.

4. Massedurchflußaufnehmer nach Anspruch 1 oder 2, bei dem die Verbindungselemente (16) dünne Stäbe, insb. dünne Metallstäbe, sind.

## Claims

1. A mass flow sensor (10) working on the Coriolis principle
- which is designed to be installed, e.g., by means of flanges (11, 12), in a conduit of a given diameter through which flows a fluid to be measured,
- with a single measuring tube (13) fixed at its ends in the respective flanges (11, 12), the vibrating portion (13') of said measuring tube having the shape of a circular cylindrical constant-pitch helix with at least one turn,
- with an external support tube (15) whose ends are fixed to the measuring tube (13) near to the respective flanges (11, 12), or to the respective flanges themselves,
- with an internal support element (14) having only its ends fixed to the measuring tube near to the respective flanges (11, 12) and disposed within the helix formed by the vibrating portion (13') of the measuring tube (14),
- with connecting elements (16) which are distributed along the vibrating portion (13') of the measuring tube (13), interconnect said portion and the support element (14), have a high stiffness in their longitudinal direction but permit lateral movements of the vibrating portion (13') of the measuring tube (13), so that only all those modes of the vibrating portion (13') of the measuring tube are permitted in which the centerline of said vibrating portion remains on the rest-position cylindrical enveloping surface of said modes,
- with means (17, 18) which excite the vibrating portion of the measuring tube into resonance vibrations perpendicular to its centerline, and
- with sensing elements (19, 20) located at at least two points spaced along said vibrating portion (13'), one part of each of said sensing elements being attached to said vibrating portion (13'), and the other part to the internal support element (14).

2. A mass flow sensor as claimed in claim 1 wherein the vibrating portion (13') of the measuring tube (14) has two and a half turns and is excited in the second mode.

3. A mass flow sensor as claimed in claim 1 or 2 wherein the connecting elements (16) are evenly distributed along the vibrating portion (13') of the measuring tube (14).

4. A mass flow sensor as claimed in claim 1 or 2 wherein the connecting elements (16) are thin bars, particularly thin metal bars.

## Revendications

1. Capteur de débit massique (10) à effet de Coriolis,
- qui peut être inséré par exemple au moyen de brides (11, 12) sur le trajet d'une conduite tubulaire de diamètre donné, traversée par un fluide à mesurer, comprenant :
- un tube de mesure unique (13) fixé à l'extrémité respective dans la bride correspondante (11, 12), tube dont la partie oscillante (13') présente la forme d'une vis cylindrique circulaire de pas constant,
- un tube support externe (15) dont l'extrémité respective est elle-même fixée sur le tube de mesure (13) à proximité de la bride concernée (11, 12) ou sur la bride correspondante,
- un élément support interne (14), dont seulement l'extrémité respective est fixée à proximité de la bride correspondante (11, 12) sur le tube de mesure (13) et qui est disposé à l'intérieur de la vis formée par la partie oscillante (13') du tube de mesure (13),
- des éléments de liaison (16) répartis le long de la partie oscillante (13') du tube de mesure (13) et reliant cette partie avec l'élément support (14), lesquels éléments présentent dans leur sens longitudinal une rigidité élevée, mais autorisent des mouvements latéraux de la partie oscillante (13') du tube de mesure si bien qu'il ne peut se produire que tous les modes d'oscillations de la partie oscillante (13') du tube de mesure dans lesquels ligne médiane de ladite partie reste sur la surface gainante de l'enveloppe cylindrique de la position de repos,
- des moyens (17, 18) qui incitent la partie oscillante (13') à effectuer des oscillations à résonance perpendiculairement à sa ligne médiane, et
- des capteurs (19, 20) qui sont disposés à au moins deux endroits décalés le long de la partie oscillante (13') dont une première partie respective est fixée sur la partie oscillante (13') et une seconde partie correspondante sur l'élément support interne (14).

2. Capteur de débit massique selon la revendication 1, dans lequel la partie oscillante (13') du tube de mesure (13) comprend deux spires et demie et est excitée dans le second mode d'oscillations.

3. Capteur de débit massique selon la revendication 1 ou 2, dans lequel les éléments de liaison (16) sont disposés et répartis de manière uniforme le long de la partie oscillante (13') du tube de mesure (13).

4. Capteur de débit massique selon la revendication 1 ou 2, dans lequel les éléments de liaison (16) sont des barres fines, en particulier de fines barres métalliques.
